# EUROPEAN PATENT APPLICATION

(11) **EP 4 838 649 A1**
(43) Date of publication of application: **11.11.2026**
(21) Application number: 26175764.5
(22) Date of filing: 30.04.2026
(51) Int. Cl.: H01M 50/15, H01M 50/55, H01M 50/103, H01M 50/172, H01M 50/188, H01M 50/553

(54) **BATTERY CELL**

(30) Priority: 09.05.2025 CN 202510596516; 24.12.2025 CN 202522756189 U
(71) Applicant: AESC Japan Ltd., Yokohama-shi, Kanagawa 220-0012 (JP)
(72) Inventor: LAI, Yang, Jiangyin City, Wuxi City (CN); GAO, Gang, Jiangyin City, Wuxi City (CN)
(74) Representative: Becker, Eberhard

(57) **Abstract**

Provided is a battery cell. The battery cell includes a housing (2000), an electrode assembly (3000) and the cover plate assembly (1000). The cover plate assembly (1000) includes a cover plate (100) and a pole (200) insulated and connected to each other. The cover plate (100) includes a cover plate body (110) and a fixed portion (120). The cover plate body (110) includes a first surface (112) and a second surface (113) disposed opposite to each other along a first direction (Z). The fixed portion (120) is arranged around the pole (200) and extends from the second surface (113) along a second direction (X) toward a center line of the pole (200) to position the pole (200) along the first direction (Z). The fixed portion (120) protrudes from the second surface (113) toward a direction away from the cover plate body (110).

## Description

### BACKGROUND

### Technical Field

The disclosure relates to a field of battery technology, and in particular to a battery cell.

### Related Art

In the development of battery technology, in addition to improving the performance of battery cells, a safety issue is also a problem that should not be ignored. If the safety issue cannot be guaranteed, then the battery cells may not be used. Therefore, how to enhance the safety of battery cells is a technical problem that urgently needs to be solved in battery technology.

### SUMMARY

In view of this, a purpose of the disclosure is to provide a cover plate assembly and a battery cell, so as to at least partially solve a problem of how to enhance the safety of battery cells.

Based on the aforementioned purpose, a first aspect of the disclosure provides a cover plate assembly including a cover plate and a pole insulated and connected to each other. The cover plate includes a cover plate body and a fixed portion (120). The cover plate body includes a first surface and a second surface disposed opposite to each other along a first direction. The fixed portion is arranged around the pole and extends at least from the second surface along a second direction toward a center line of the pole to position the pole along the first direction. The second direction is perpendicular to the first direction. The fixed portion protrudes from the second surface along the first direction toward a direction away from the cover plate body. A maximum linear distance between a protruding section and the second surface along the first direction is H₁. A thickness of the cover plate body is H. A ratio of H₁ to H is greater than 0 and less than or equal to 0.2.

Optionally, 1 mm≤H≤3 mm, a ratio of H₁ to H is greater than 0 and less than or equal to 0.15.

Optionally, the fixed portion includes a first fixed portion and a second fixed portion. The first fixed portion extends from the first surface at least along the first direction toward a direction away from the cover plate body. The second fixed portion extends from the second surface at least along the second direction toward the center line of the pole. The first fixed portion includes a first inner wall. The second fixed portion includes a second inner wall and a sixth surface disposed opposite to the second inner wall. The first inner wall, the second inner wall, and a step portion connected to the first inner wall and the second inner wall form an accommodation space. The step portion protrudes from the second inner wall toward a direction of the first surface. The pole is at least partially disposed in the accommodation space. Along the first direction, a maximum linear distance between the step portion and the second inner wall is H₂, a maximum linear distance between the sixth surface and the first surface is H₃, and a ratio of H₂ to H₃ is 0.02 to 0.5.

Optionally, the second surface is provided with a groove surrounding the second fixed portion; the groove satisfies at least one of following conditions:
along the second direction, the first fixed portion includes a first outer wall away from the accommodation space, the first outer wall is connected to the first surface and forms a first connection portion; along the first direction, a projection of the first connection portion is in the groove;
a minimum linear spacing distance between adjacent edges of the groove and an inner wall of the accommodation space is L₄, where L₄>0.8 mm;
an intersection point of straight lines where the first inner wall and the second inner wall are located is x, a minimum linear distance between the groove and x is L₄', where L₄ is greater than L₄';
a minimum linear distance from a connection line between the step portion and an intersection point of the first inner wall and the second inner wall to the groove is L4'", where L4 is greater than or equal to L4".

Optionally, the pole includes a columnar pole body and a protruding portion protruding from the pole body along the second direction. The protruding portion, the first fixed portion, and the second fixed portion are all ring structures. A minimum diameter of an inner hole enclosed by the first fixed portion is D₁, a minimum diameter of an inner hole enclosed by the second fixed portion is D₂, and a maximum outer diameter of the protruding portion is D₃, where D₂<D₃<D₁.

Optionally, the first fixed portion includes a first terminal away from the cover plate body. A portion of the first fixed portion close to the first terminal extends toward a center line of the pole. The pole includes a columnar pole body and a protruding portion protruding from the pole body along the second direction. The cover plate assembly further includes an insulating sealing structure. The pole is insulated and connected to the cover plate through the insulating sealing structure. Along the first direction, a minimum linear spacing distance between the first terminal and the protruding portion is H₅, a maximum linear spacing distance between facing portions of the first inner wall and the second inner wall is H₄, and a ratio of H₅ to H₄ is 0.3 to 0.47.

Optionally, the pole body includes a third surface away from the second surface along the first direction. Along the first direction, a maximum dimension of the protruding portion is H₆, a minimum linear spacing distance between the third surface and the protruding portion is H₇, and a ratio of H₆ to H₇ is 0.2 to 0.3.

Optionally, the pole body includes a third surface away from the second surface along the first direction. Along the first direction, a maximum linear spacing distance between the third surface and the first surface is H₈, a maximum dimension of the pole is H₉, and a ratio of H₈ to H₉ is 0.3 to 0.6.

Optionally, along the first direction, a projection of the second fixed portion and a projection of the protruding portion overlap, and a minimum dimension of the overlapping portion along the second direction is L₁. On a side of the protruding portion close to the second fixed portion, along the second direction, a linear spacing distance between an end portion of the protruding portion away from the pole body and the pole body close to the second fixed portion is L₂, and a ratio of L₁ to L₂ is greater than 0.4 and less than 0.8.

Optionally, the insulating sealing structure includes an upper insulating portion. The upper insulating portion extends from between the pole and the first fixed portion to a side of the first fixed portion away from the accommodation space and connected to the first surface. Along the first direction, the upper insulating portion includes a fourth surface away from the second surface, the first fixed portion includes a fifth surface away from the second surface, and the fourth surface is located on a side of the fifth surface away from the second surface;
along the first direction, a minimum linear distance between the fifth surface and the first surface is H₁₁, a minimum linear distance between the fourth surface and the first surface is H₁₂, and a ratio of H₁₁ to H₁₂ is greater than 0.7 and less than 0.9.

Optionally, along the first direction, a projection of the upper insulating portion and a projection of the protruding portion overlap, and a minimum dimension of the overlapping portion along the second direction is L₃. For a portion of the first fixed portion extending along the first direction, a minimum linear spacing distance between a first inner wall thereof and the pole body along the second direction is L₅, and a ratio of L₃ to L₅ is 0.2 to 0.6.

Optionally, the insulating sealing structure includes a lower insulating portion. Along the first direction, the lower insulating portion is at least disposed on a side of the second surface away from the first surface. The lower insulating portion includes a first annular plane adjacent to the pole and disposed surrounding the pole. Along the first direction, the pole protrudes from the first annular plane toward a direction away from the first surface, and a protruding height is H₁₀, where 0<H₁₀≤1 mm.

Optionally, the first fixed portion includes a first terminal away from the cover plate body. A portion of the first fixed portion close to the first terminal extends toward a center line of the accommodation space along the second direction. A maximum dimension of the portion of the first fixed portion close to the first terminal along the first direction is H₁₃. A ratio of H₁₃ to H is 0.35 to 0.45.

Optionally, the second fixed portion includes a second terminal away from the cover plate body. A portion of the second fixed portion close to the second terminal extends toward a center line of the accommodation space along the second direction. A maximum dimension of the portion of the second fixed portion close to the second terminal along the first direction is H₁₄. A ratio of H₁₄ to H is 0.4 to 0.5.

Optionally, along the first direction, a maximum linear spacing distance between facing portions of the first inner wall and the second inner wall is H₄. The pole satisfies at least one of following conditions:
a dimension of the pole is H₉, a ratio of H₄ to H₉ is 0.3 to 0.5;
the pole includes a columnar pole body, and a protruding portion protruding from the pole body along the second direction, along the first direction, a maximum dimension of the protruding portion is H₆, and a ratio of H₆ to H₄ is greater than 0.2 and less than 0.4.

Based on the same inventive concept, a second aspect of the present application provides a battery cell including a housing, an electrode assembly, and the cover plate assembly as described in the first aspect. The cover plate assembly is connected to the housing. The electrode assembly is disposed in a space formed by the cover plate assembly and the housing enclosing together.

From the aforementioned description, in the cover plate assembly and battery cell provided by the disclosure, along the first direction, the fixed portion protrudes from the second surface, and a maximum linear distance from the second surface is H₁, a thickness of the cover plate body is H, a ratio of H₁ to H is designed to be greater than 0 and less than or equal to 0.2, so as to limit a maximum dimensional linear distance of the fixed portion protruding from the second surface along the first direction, which ensures that a connection between the fixed portion and the cover plate body has greater structural strength, effectively avoiding fractures between the fixed portion and the cover plate body, helping to improve connection reliability between the two, and further improving safety performance of the battery cell. At the same time, space occupied by the fixed portion and the pole in a height direction inside the battery cell may be reduced, which helps to improve space utilization rate inside the battery cell and improve energy density of the battery cell.

### BRIEF DESCRIPTION OF THE DRAWINGS

In order to more clearly illustrate the technical solutions in the disclosure or related technology, t the drawings required for use are briefly introduce in the following description of the embodiments or related technology. Obviously, the drawings in the following description are merely embodiments of the disclosure. For persons skilled in the art, other drawings may also be obtained based on these drawings without creative effort.
FIG. 1 is a partial schematic cross-sectional view of a battery cell having a first structure according to an embodiment of the disclosure.
FIG. 2 is a partial schematic top view of a cover plate assembly having a second structure according to an embodiment of the disclosure.
FIG. 3 is a schematic cross-sectional view of a section A-A in FIG. 2.
FIG. 4 is an enlarged schematic view of a portion B in FIG. 3.
FIG. 4A is an enlarged schematic view of a portion C in FIG. 4.
FIG. 4B is an enlarged schematic view of a portion D in FIG. 4A.
FIG. 5 is a schematic view of a battery cell according to an embodiment of the disclosure.

### DESCRIPTION OF THE EMBODIMENTS

To enable the purpose, technical solutions, and advantages of the disclosure clearer, the disclosure is further described in detail below through embodiments and with reference to the accompanying drawings.

It should be noted that: unless otherwise specifically stated, the relative arrangement of components, numerical expressions, and numerical values described in the embodiments do not limit the scope of the disclosure.

Meanwhile, it should be understood that, for convenience, the dimensions of various portions shown in the drawings are not drawn according to actual scaling relationships.

The following description of at least one exemplary embodiment is actually merely illustrative and in no way serves as any limitation on the disclosure, application, or use.

It should be noted that, unless otherwise defined, technical terms or scientific terms used in the embodiments of the disclosure should have the usual meanings understood by persons skilled in the art. "First", "second", and similar words used in the embodiments of the disclosure do not indicate any order, quantity, or importance, but are only used to distinguish different components. Similar words such as "include" or "contain" mean that the elements or objects appearing before the word cover the elements or objects listed after the word and the equivalents, without excluding other elements or objects. Similar words such as "connect" or "connected" are not limited to physical or mechanical connections, but may include electrical connections, whether direct or indirect. "Upper", "lower", "left", and "right" are only used to indicate relative positional relationships, and when the absolute position of the described object changes, the relative positional relationship may also change accordingly.

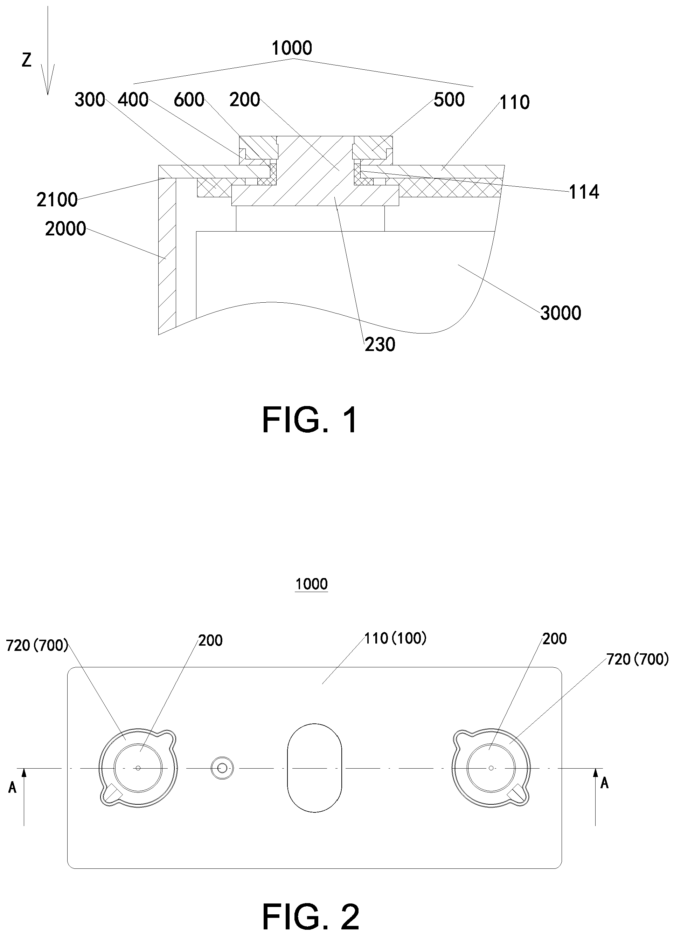

FIG. 1 is a partial schematic cross-sectional view of a battery cell having a first structure according to an embodiment of the disclosure.

As shown in FIG. 1, in some embodiments, the battery cell includes a cover plate assembly 1000 and a housing 2000. The cover plate assembly 1000 includes a cover plate body 110. The cover plate body 110 is provided with a mounting hole 114 penetrating through a thickness direction (such as the Z direction in FIG. 1). The cover plate body 110 covers an opening terminal 2100 of the housing 2000, so that the cover plate body 110 and the housing 2000 jointly enclose to form a space for accommodating an electrode assembly 3000. A lower insulating member 300 is connected to a side of the cover plate body 110 close to the electrode assembly 3000. An upper insulating member 400 is connected to a side of the cover plate body 110 away from the electrode assembly 3000. The cover plate assembly 1000 further includes a pole 200. The pole 200 is fitted with a sealing ring 600 and penetrates through the lower insulating member 300, the cover plate body 110, and the upper insulating member 400. A terminal of the pole 200 away from the electrode assembly 3000 extends out of the upper insulating member 400 and is riveted to a riveting block 500. The pole 200 and the cover plate body 110 compress the sealing ring 600 to seal between the pole 200 and the cover plate body 110 through the sealing ring 600, and insulate between the pole 200 and the cover plate body 110 through the upper insulating member 400 and the lower insulating member 300.

From combination of the foregoing content, it may be known that in this embodiment, to achieve insulating sealing connection between the pole 200 and the cover plate body 110, at least the lower insulating member 300, the sealing ring 600, the upper insulating member 400, and the riveting block 500 need to be provided, resulting in more components and higher material costs. Meanwhile, in the process of assembling the pole 200 to the cover plate body 110, processes such as bonding (for example, connecting the lower insulating member 300 with the cover plate body 110) and riveting (for example, connecting the riveting block 500 with the pole 200) are also required, making the assembly process relatively complex and the assembly efficiency relatively low.

In order to solve the aforementioned problems, a cover plate assembly 1000 having other structures is provided in the embodiments of the disclosure.

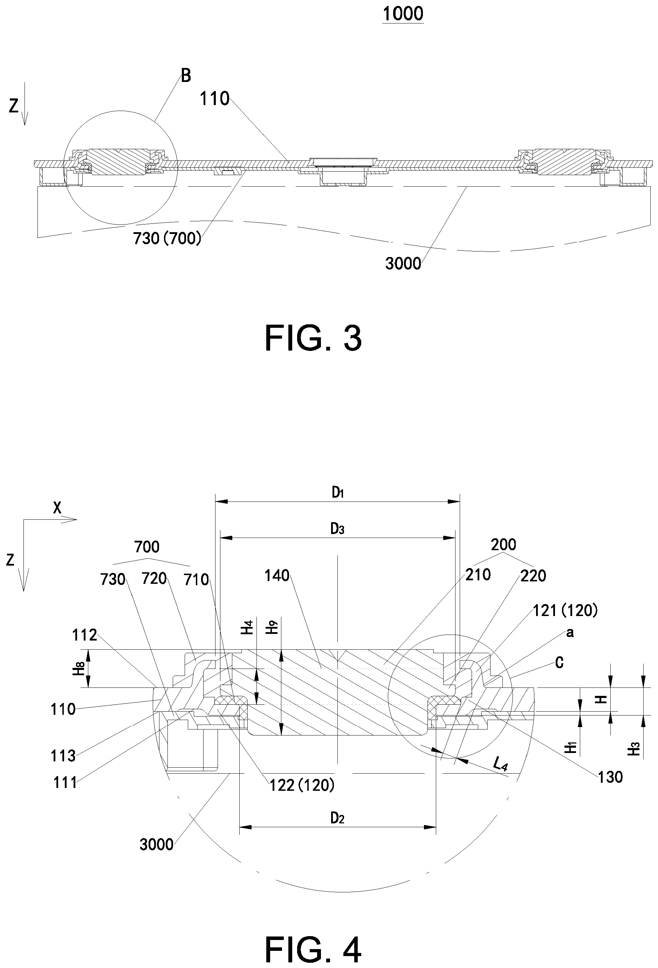

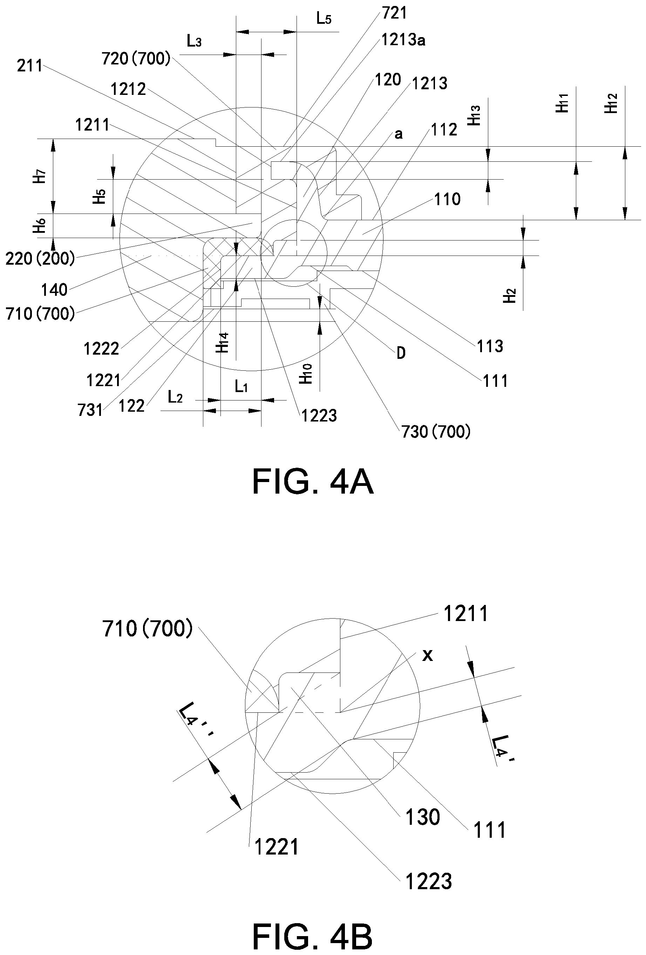

FIG. 2 is a partial schematic top view of a cover plate assembly 1000 having a second structure according to an embodiment of the disclosure. FIG. 3 is a schematic cross-sectional view of a section A-A in FIG. 2. FIG. 4 is an enlarged schematic view of a portion B in FIG. 3. FIG. 4A is an enlarged schematic view of a portion C in FIG. 4.

As shown in FIG. 4 and FIG. 4A, in some embodiments, the cover plate assembly 1000 includes: a cover plate 100 and a pole 200 insulated and connected to each other. The cover plate 100 includes a cover plate body 110 and a fixed portion 120. The cover plate body 110 includes a first surface 112 and a second surface 113 disposed opposite to each other along a first direction (such as the Z direction in FIG. 4). The fixed portion 120 is disposed around the pole 200, and extends at least from the second surface 113 along a second direction (such as the X direction in FIG. 4) toward a center line of the pole 200 to position the pole 200 along the first direction. The second direction is perpendicular to the first direction. The fixed portion 120 protrudes from the second surface 113 along the first direction toward a direction away from the cover plate body 110, and a maximum linear distance between a protruding section and the second surface 113 along the first direction is H₁. A thickness of the cover plate body 110 is H. A ratio of H₁ to H is greater than 0 and less than or equal to 0.2.

Exemplarily, the pole 200 may be connected to the cover plate body 110 by insertion, snap-fitting, fasteners, or thermoplastic parts.

Exemplarily, a ratio of H₁ to H may be 0.01, 0.03, 0.05, 0.07, 0.1, 0.13, 0.15, 0.17, or 0.2.

Exemplarily, H₁ may be 0.1 mm, 0.13 mm, 0.15 mm, 0.18 mm, 0.2 mm, 0.23 mm, 0.25 mm, or 0.28 mm.

Exemplarily, when the cover plate assembly 1000 is applied to a battery cell, the second surface 113 approaches the electrode assembly 3000.

Exemplarily, the cover plate body 110 may be a plate-like structure, and a plate surface of the cover plate body 110 may be provided with a recessed structure or a protruding structure.

Exemplarily, the pole 200 may include a positive pole and a negative pole. The positive pole is configured to be electrically connected to a positive tab of the electrode assembly 3000 (the positive tab is formed by a current collector of a positive electrode sheet of the electrode assembly 3000 extending outward) to form a positive electrode of the battery cell. The negative pole is configured to be electrically connected to a negative tab of the electrode assembly 3000 (the negative tab is formed by a current collector of a negative electrode sheet of the electrode assembly 3000 extending outward) to form a negative electrode of the battery cell.

Exemplarily, the fixed portion 120 and the cover plate body 110 may be integrally molded and connected.

It should be noted that the cover plate assembly 1000 may include an insulating sealing structure 700. The cover plate 100 and the pole 200 are insulated and connected through the insulating sealing structure 700.

Comparing FIG. 1 and FIG. 4, it may be known that in the structure shown in FIG. 1, a middle portion of the pole 200 has a columnar structure, and a lower end thereof needs to connect a pole bottom plate 230 having a relatively large lateral area. The pole bottom plate 230 cooperates with the riveting block 500 vertically to clamp the upper insulating member 400, the sealing ring 600, the cover plate body 110, and the lower insulating member 300 to form a stable pole 200 assembly. However, since the pole 200 needs to be provided with the pole bottom plate 230 and connected to the riveting block 500, the cover plate assembly 1000 may have a large amount of metal material usage, high material costs, and the relatively large overall weight.

In the structure shown in FIG. 4, the pole 200 has an overall substantially columnar structure. A portion of the fixed portion 120 connected to the second surface 113 may support the pole 200, and the pole 200 may form a reliable connection with a portion of the fixed portion 120 connected to the first surface 112 through the insulating sealing structure 700. Compared to the structure shown in FIG. 1, the pole bottom plate 230 and the riveting block 500 are eliminated, reducing the metal material usage of the cover plate assembly 1000, which helps to reduce the assembly difficulty and material cost of the cover plate assembly 1000.

From combination of the foregoing content, it may be known that the fixed portion 120 has a relatively important role for the reliable connection between the pole 200 and the cover plate 100. The structural strength at the connection (hereinafter referred to as the body connection portion) between the fixed portion 120 and the cover plate body 110 is relatively low, which may cause cracks or even fractures at the body connection portion during use, and also easily cause fractures during the preparation of the cover plate 100, seriously affecting the yield rate of the cover plate 100. When the battery cell adopts a cover plate 100 with cracks, due to the low connection reliability between the pole 200 and the cover plate 100, the battery cell may have adverse effects on the safety.

In order to solve the aforementioned problems, in this embodiment, the fixed portion 120 is designed to protrude from the second surface 113 in the direction away from the cover plate body 110 along the first direction.

It should be noted that a portion of the fixed portion 120 is directly connected to the second surface 113 of the cover plate body 110. In this portion, a portion close to the second surface 113 extends in the direction away from the cover plate body 110 along the first direction, so that the fixed portion 120 protrudes from the second surface 113, and a portion away from the second surface 113 extends horizontally toward a center line (such as the dash-dot line in FIG. 4) of the pole 200.

It should be noted that a protruding structure or a recessed structure may be provided on a bottom surface (that is, a surface away from the first surface 112 along the first direction) of the fixed portion 120, which causes that along a circumferential direction of the fixed portion 120, linear distances along the first direction between bottom surfaces of different regions and the second surface 113 are not the same, and H₁ is a maximum value thereof.

Taking the direction and structure shown in FIG. 4 and FIG. 4A as an example for illustration, it may be understood that the portion of the fixed portion 120 connected to the second surface 113 may position the pole 200, then a position of this portion in a vertical direction may affect a position of the pole 200 in the vertical direction. That is, the dimension of the fixed portion 120 protruding from the second surface 113 becomes larger, and a height of the pole 200 protruding from the first surface 112 becomes smaller.

If the ratio of H₁ to H is too large, then the height of the fixed portion 120 protruding from the second surface 113 is too large. When the fixed portion 120 is formed by stamping, the stretching degree of the fixed portion 120 is relatively large, which may cause low structural strength at the body connection portion and easily cause cracks. At the same time, when assembled into a battery cell, the cover plate assembly 1000 may make the fixed portion 120 and the pole 200 to excessively occupy space inside the battery cell configured for the electrode assembly 3000, which results in low space utilization rate inside the battery cell and low energy density of the battery cell.

To avoid the aforementioned problems, the cover plate assembly 1000 provided in this embodiment is designed to have the ratio of H₁ to H to be greater than 0 and less than or equal to 0.2 to limit the maximum dimensional linear distance of the fixed portion 120 protruding from the second surface 113 along the first direction, ensuring that the body connection portion has relatively large structural strength, which may avoid fractures between the fixed portion 120 and the cover plate body 110, help to improve the connection reliability between the two, and further improve the safety performance of the battery cell adopting the cover plate assembly 1000. At the same time, the space inside the battery cell occupied by the fixed portion 120 and the pole 200 in the height direction may also be reduced, helping to improve the space utilization rate inside the battery cell and improve the energy density of the battery cell.

In some embodiments, 1 mm≤H≤3 mm, and the ratio of H₁ to H is greater than 0 and less than or equal to 0.15.

It should be noted that when the thickness of the cover plate body 110 is relatively small, that is, when 1 mm≤H≤3 mm, correspondingly, a thickness of the fixed portion 120 is also relatively small, which make cracks easily occur at the body connection portion. In order to further reduce the risk of fractures between the fixed portion 120 and the cover plate body 110, in this embodiment, the ratio of H₁ to H is further limited to have a design of being greater than 0 and less than or equal to 0.15, so that the cover plate assembly 1000 may better achieve the aforementioned beneficial effects.

As shown in FIG. 4 and FIG. 4A, in some embodiments, the fixed portion 120 includes a first fixed portion 121 and a second fixed portion 122. The first fixed portion 121 extends from the first surface 112 at least along the first direction toward the direction away from the cover plate body 110. The second fixed portion 122 extends from the second surface 113 at least along the second direction toward the center line of the pole 200. The first fixed portion 121 includes a first inner wall 1211. The second fixed portion 122 includes a second inner wall 1221 and a sixth surface 1223 disposed opposite to the second inner wall 1221. The first inner wall 1211, the second inner wall 1221, and the step portion 130 connected to the first inner wall 1211 and the second inner wall 1221 form an accommodation space 140. The step portion 130 protrudes from the second inner wall 1221 toward the direction of the first surface 112. The pole 200 is at least partially disposed in the accommodation space 140. Along the first direction, a maximum linear distance between the step portion 130 and the second inner wall 1221 is H₂, a maximum linear distance between the sixth surface 1223 and the first surface 112 is H₃, and a ratio of H₂ to H₃ is 0.02 to 0.5.

Exemplarily, the ratio of H₂ to H₃ may be 0.02, 0.05, 0.08, 0.1, 0.15, 0.2, 0.25, 0.3, 0.35, 0.4, 0.45, or 0.5.

Exemplarily, H₂ may be 0.3 mm, 0.4 mm, 0.5 mm, 0.6 mm, or 0.7 mm.

It should be noted that the insulating sealing structure 700 is at least partially located in the accommodation space 140.

It should be noted that the first fixed portion 121 extending from the first surface 112 at least along the first direction toward the direction away from the cover plate body 110 does not indicate that a terminal of the first fixed portion 121 close to the cover plate body 110 is disposed on the first surface 112, but only indicates that the first fixed portion 121 extends out of the cover plate body 110 from the first surface 112. The first fixed portion 121 may also extend into between the first surface 112 and the second surface 113. Similarly, the second fixed portion 122 extending from the second surface 113 at least along the second direction toward the center line of the pole 200 does not indicate that a terminal of the second fixed portion 122 close to the cover plate body 110 is disposed on the second surface 113. The second fixed portion 122 may also extend into between the first surface 112 and the second surface 113.

It should be noted that the step portion 130 is continuously disposed or intermittently disposed around the pole 200. The second inner wall 1221 may be an annular plane.

It should be noted that the terminal of the first fixed portion 121 is directly connected to the cover plate body 110. A portion of the first fixed portion 121 close to this terminal extends along the first direction toward the direction away from the cover plate body 110, so that this portion of the first fixed portion 121 protrudes from the first surface 112. A portion of the first fixed portion 121 close to another terminal extends toward the center line direction of the pole 200. Alternatively, the first fixed portion 121 may entirely extend along the first direction toward the direction away from the cover plate body 110.

It should be noted that a top surface (that is, the surface away from the second inner wall 1221 along the first direction) of the step portion 130 may be provided with a protruding structure or a recessed structure, may be a plane, or may be an inclined surface, which makes the linear distance along the first direction between the top surface of different regions of the step portion 130 and the second inner wall 1221 to be different, and H₂ is the maximum value thereof.

Combining the structure and direction shown in FIG. 4 and FIG. 4A for exemplary illustration, if the step portion 130 is not formed between an inner wall of the first fixed portion 121 and an inner wall of the second fixed portion 122, then the inner wall of the first fixed portion 121 and the inner wall of the second fixed portion 122 may intersect and form a right-angle structure. When the step portion 130 is formed between the inner wall of the first fixed portion 121 and the inner wall of the second fixed portion 122, compared to the right-angle structure, sufficient material at the connection between the first fixed portion 121 and the second fixed portion 122 may be ensured, which helps to improve the structural strength at the connection between the second fixed portion 122 and the cover plate body 110, avoid fractures among the first fixed portion 121, the second fixed portion 122, and the cover plate body 110, and improve the connection reliability among the three.

If the ratio of H₂ to H₃ is too small, then for the thickness of the second fixed portion 122 and the height of the second fixed portion 122 protruding from the second surface 113, the relative height of the step portion 130 is too small, and a reinforcing effect of the step portion 130 on the connection (hereinafter referred to as the second connection) between the second fixed portion 122 and the cover plate body 110 is relatively small. A position of the first fixed portion 121 and a position of the second fixed portion 122 are fixed, and if the ratio of H₂ to H₃ is too large, then the step portion 130 may excessively occupy the accommodation space 140. The space configured to dispose sealing structural components (for example, a sealing portion 710) in the accommodation space 140 is relatively reduced, which may cause adverse effects on the sealing performance between the pole 200 and the cover plate 100.

To avoid the aforementioned problems, in this embodiment, the ratio of H₂ to H₃ is designed to be 0.02 to 0.5, which may ensure that the step portion 130 may provide a better reinforcing effect on the second connection, and ensure the connection strength between the second fixed portion 122 and the cover plate body 110. At the same time, the accommodation space 140 providing relatively sufficient setting space for the sealing structural components may also be ensured, so as to ensure that the sealing structural components may achieve a relatively reliable sealing effect.

As shown in FIG. 4 and FIG. 4A, in some embodiments, the second surface 113 is provided with a groove 111 surrounding the second fixed portion 122.

Exemplarily, the groove 111 extends along the second direction to the second connection.

In the process of forming the cover plate 100, the second surface 113 may be compressed by an annular mold to form the recessed groove 111. The original material of the groove 111 is compressed to the first connection (that is, the connection between the first fixed portion 121 and the cover plate body 110), the second connection, and the step portion 130, so that the three positions have relatively sufficient material and greater structural strength. At the same time, The first connection having sufficient material may also improve the situation where the root of the first fixed portion 121 collapses toward the first surface 112 at the first connection during the process of forming the first fixed portion 121, and reduce the dimension of the overlapping material region between the first fixed portion 121 and the cover plate body 110.

Specifically, in some embodiments, the groove 111 satisfies at least one of the conditions as follows.

First, along the second direction, the first fixed portion 121 includes a first outer wall 1213 away from the accommodation space 140. The first outer wall 1213 is connected to the first surface 112 and forms a first connection portion a. Along the first direction, a projection of the first connection portion a is in the groove 111.

Exemplarily, the first outer wall 1213 is arranged around a center line of the accommodation space 140. Correspondingly, the first connection portion a is a circle or polygon with closed ends.

In this embodiment, at least part of the groove 111 is located directly below the first fixed portion 121, so that the original material of the groove 111 may be more easily compressed to the first connection to further ensure that the material at the first connection is relatively sufficient.

Second, a linear spacing distance between adjacent edges of the groove 111 and the inner wall of the accommodation space 140 is L₄, where L₄>0.8 mm.

It should be noted that L₄ may be 0.9 mm, 1 mm, 1.1 mm, 1.2 mm, 1.3 mm, or 1.5 mm.

If L₄ is too small, then the effective material thickness at the second connection is too small, the structural strength is too low, and cracks may occur at the second connection.

To avoid the aforementioned problems, in this embodiment, L₄ is designed as L₄>0.8mm, which may ensure that the second connection has relatively sufficient material thickness, reduce the risk of cracks in the cover plate body 110, and help to improve the safety performance of the battery cell using the cover plate assembly 1000.

FIG. 4B is an enlarged schematic view of a portion D in FIG. 4A.

Third, as shown in FIG. 4 and FIG. 4B, an intersection point of the straight lines where the first inner wall 1211 and the second inner wall 1221 are located is x, and a minimum linear distance between the groove 111 and x is L₄', where L₄ is greater than L₄'.

The problems caused by designing L₄ too small have been described in the foregoing content and are not be repeated here.

The beneficial effects achieved by designing L₄ as L₄ greater than L₄' are similar to the aforementioned beneficial effects of designing L₄ as L₄>0.8 mm, and are not be repeated here.

Fourth, as shown in FIG. 4 and FIG. 4B, a minimum linear distance from the connection line between the step portion 130 and the intersection point of the first inner wall 1211 and the second inner wall 1221 to the groove 111 is L₄", where L₄ is greater than or equal to L₄".

The problems caused by designing L₄ too small have been described in the foregoing content and are not be repeated here.

The beneficial effects achieved by designing L₄ as L₄ greater than or equal to L₄" are similar to the aforementioned beneficial effects of designing L₄ as L₄>0.8 mm, and are not be repeated here.

As shown in FIG. 4, in some embodiments, the pole 200 includes a columnar pole body 210, and a protruding portion 220 protruding from the pole body 210 along the second direction. The protruding portion 220, the first fixed portion 121 and the second fixed portion 122 are all ring structures. A minimum diameter of an inner hole (hereinafter referred to as the first inner hole) enclosed by the first fixed portion 121 is D₁, a minimum diameter of an inner hole (hereinafter referred to as the first inner hole) enclosed by the second fixed portion 122 is D₂, and a maximum outer diameter of the protruding portion 220 is D₃, where D₂<D₃<D₁.

It should be noted that, from combination of the foregoing content, the second fixed portion 122 extends at least along the second direction toward the center line of the pole 200, so the terminal portion of the second fixed portion 122 away from the cover plate body 110 is closer to the center line of the pole 200 relative to other portions of the second fixed portion 122, and the diameter of the inner hole enclosed by this terminal portion is D₂. Similarly, the diameter of the inner hole enclosed by the portion of the first fixed portion 121 closest to the center line of the pole 200 is D₁.

Exemplarily, the pole body 210 may be a cylinder or a polygonal column having a center line.

Exemplarily, a shape of an outer contour of the protruding portion 220 perpendicular to the center line of the pole 200 may be the same as or different from a shape of an outer contour of the pole body 210 perpendicular to the center line of the pole 200.

Exemplarily, the pole body 210 and the protruding portion 220 may be connected by welding or integral molding.

Exemplarily, the protruding portion 220 may be arranged around the circumferential side wall of the pole body 210. The circumferential side wall of the pole body 210 is arranged around the center line of the pole 200.

Taking the structure and direction shown in FIG. 4 as an example for illustration, when assembling the cover plate assembly 1000, before assembling the pole 200 to the cover plate 100, the first fixed portion 121 and the second fixed portion 122 have already completed molding according to the design structure, without requiring further machining. At this time, even if metal foreign matter exists in the accommodation space 140, and no structural component has been assembled in the accommodation space 140 yet, both the first inner hole and the second inner hole are in an open state, so that the vacant accommodation space 140 is thoroughly cleaned, and the metal foreign matter inside is removed.

After confirming that no metal foreign matter exists in the accommodation space 140, the pole 200 is inserted into the accommodation space 140 from a side of the first fixed portion 121. Since D₃<D₁, the pole 200 may pass through the first inner hole along the first direction. After the pole 200 enters the accommodation space 140, and since D₂<D₃, the protruding portion 220 may be blocked and positioned by the second fixed portion 122, so that the portion of the pole 200 remains in the accommodation space 140. The terminal portion of the pole body 210 may extend out of the accommodation space 140 through the second inner hole to facilitate electrical connection with the tab of the electrode assembly 3000.

Subsequently, the insulating sealing connection between the pole 200 and the cover plate 100 may be completed through the insulating sealing structure 700.

In addition, the second fixed portion 122 is a ring structure, which may apply relatively uniform supporting force to the protruding portion 220, and may position the protruding portion 220 more stably and effectively.

As shown in FIG. 4 and FIG. 4A, in some embodiments, the first fixed portion 121 includes a first terminal 1212 away from the cover plate body 110. A portion of the first fixed portion 121 close to the first terminal 1212 extends toward the center line of the pole 200. The cover plate assembly 1000 further includes an insulating sealing structure 700. The pole 200 is insulated and connected to the cover plate 100 through the insulating sealing structure 700. Along the first direction, a minimum linear spacing distance between the first terminal 1212 and the protruding portion 220 is H₅, a maximum linear spacing distance of the facing portions between the first inner wall 1211 and the second inner wall 1221 is H₄, and ratio of H₅ to H₄ is 0.3 to 0.47.

Exemplarily, H₅ may be 1.05 mm, 1.1 mm, 1.15 mm, 1.2 mm, 1.25 mm, 1.3 mm, or 1.35 mm.

Exemplarily, the ratio of H₅ to H₄ may be 0.3, 0.33, 0.35, 0.37, 0.4, 0.43, 0.45, or 0.47.

It should be noted that a top surface of the protruding portion 220 may be provided with a recessed structure or a protruding structure, so the linear spacing distances along the first direction between the first terminal 1212 and different regions of the protruding portion 220 are not the same, and H₅ is the minimum value thereof.

If the ratio of H₅ to H₄ is too small, then H₅ is too small, so that along the first direction, the spacing distance between the first terminal 1212 and the protruding portion 220 is too small, and a thickness of a portion of the insulating sealing structure 700 located between the two is too small. When the cover plate assembly 1000 is assembled, used, or when the pole 200 is subjected to reverse (that is, from bottom to top) thrust, the portion of the insulating sealing structure 700 may crack under the staggered pressure generated by both the first terminal 1212 and the protruding portion 220, which may cause adverse effects on the insulation property, sealing performance, and structural strength of the insulating sealing structure 700. The top terminal of the pole 200 needs to extend out of the first terminal 1212 at least along the first direction to facilitate connection with external circuits, and if the ratio of H₅ to H₄ is too large, then H₅ is too large, which may cause the dimension (that is, the height of the pole 200) of the pole 200 along the first direction to be too large, and increased material cost of the pole 200. The space occupied by the pole 200 along the first direction may also increase, which may cause adverse effects on the energy density of the battery cell.

To avoid the aforementioned problems, in this embodiment, the ratio of H₅ to H₄ is designed to be 0.3 to 0.47, which helps reduce the risk of cracks of the insulating sealing structure 700, helps ensure the insulation property, sealing performance, and structural strength of the insulating sealing structure 700, and ensures reliable connection between the pole 200 and the cover plate 100. At the same time, the height of the pole 200 may be reduced to effectively control the material cost of the pole 200, the space occupied by the pole 200 in the battery cell may be reduced, and the energy density of the battery cell may be improved.

As shown in FIG. 4 and FIG. 4A, in some embodiments, the pole body 210 includes a third surface 211 away from the second surface 113 along the first direction. Along the first direction, a maximum dimension of the protruding portion 220 is H₆, a minimum linear spacing distance between the third surface 211 and the protruding portion 220 is H₇, and a ratio of H₆ to H₇ is 0.2 to 0.3.

Exemplarily, the ratio of H₆ to H₇ may be 0.2, 0.22, 0.24, 0.25, 0.26, 0.28, or 0.3.

It should be noted that the top surface or bottom surface of the protruding portion 220 may be provided with a recessed structure or a protruding structure, so the thicknesses (that is, dimensions along the first direction) of different regions of the protruding portion 220 are not the same, and H₆ is the maximum value thereof. Similarly, the linear spacing distances along the first direction between the third surface 211 and different regions of the top surface of the protruding portion 220 are not the same, and H₇ is the maximum value thereof.

If the ratio of H₆ to H₇ is too large, then the thickness of the protruding portion 220 is too large, excessively occupying the accommodation space 140, which may cause the thickness of the insulating sealing structure 700 in the accommodation space 140 to be too small, and result in cracks easily, so that adversely affects occur on the insulation property, sealing performance, and structural strength of the insulating sealing structure 700. If the ratio of H₆ to H₇ is too small, then the thickness of the protruding portion 220 is too small, and the own structural strength is poor. When the third surface 211 is under pressure, the protruding portion 220 may deform or crack, making it difficult to achieve reliable connection between the pole 200 and the cover plate 100.

To avoid the aforementioned problems, in this embodiment, the ratio of H₆ to H₇ is designed to be 0.2 to 0.3, which helps reduce the risk of cracks of the insulating sealing structure 700 and ensures the insulation property, sealing performance, and structural strength of the insulating sealing structure 700. At the same time, the structural strength of the protruding portion 220 is improved to ensure reliable connection between the pole 200 and the cover plate 100.

As shown in FIG. 4 and FIG. 4A, in some embodiments, along the first direction, a maximum linear spacing distance between the third surface 211 and the first surface 112 is H₈, a maximum dimension of the pole 200 is H₉, and a ratio of H₈ to H₉ is 0.3 to 0.6.

Exemplarily, the ratio of H₈ to H₉ may be 0.3, 0.35, 0.4, 0.45, 0.5, 0.55, or 0.6.

If the ratio of H₈ to H₉ is too large, then the height of the pole 200 protruding from the first surface 112 is too large. When the battery cell using the cover plate assembly 1000 of this embodiment is disposed in a battery pack, the protruding pole 200 occupies too much vertical space in the battery pack, which may cause the energy density of the battery pack to be too low. If the ratio of H₈ to H₉ is too small, then the height of the pole 200 protruding from the first surface 112 is too small, the linear spacing distance between the third surface 211 and the first fixed portion 121 along the first direction is too small, and the space configured to dispose the insulating sealing structure 700 is too small, which may cause the thickness of that portion of the insulating sealing structure 700 to be too small and the structural strength to be too low.

To avoid the aforementioned problems, in this embodiment, the ratio of H₈ to H₉ is designed to be 0.3 to 0.6, which may ensure that the height of the pole 200 protruding from the first surface 112 is within a relatively reasonable range. When the battery cell using the cover plate assembly 1000 of this embodiment is disposed in a battery pack, the protruding pole 200 occupies less vertical space in the battery pack, which helps improve the energy density of the battery pack. At the same time, the dimensions of the pole 200 and the insulating sealing structure 700 meeting process requirements and having high structural strength may be ensured, and reliable connection between the pole 200 and the cover plate 100 achieved through the insulating sealing structure 700 may also be ensured.

As shown in FIG. 4 and FIG. 4A, in some embodiments, along the first direction, a projection of the second fixed portion 122 and the protruding portion 220 overlap, and a minimum dimension of the overlapping portion along the second direction is L₁. On a side of the protruding portion 220 close to the second fixed portion, along the second direction, a linear spacing distance between the end portion of the protruding portion 220 away from the pole body 210 and the pole body 210 close to the second fixed portion 122 is L₂. A ratio of L₁ to L₂ is greater than 0.4 and less than 0.8.

Exemplarily, L₁ may be 1 mm, 1.2 mm, 1.5 mm, 1.8 mm, or 2 mm.

Exemplarily, the ratio of L₁ to L₂ may be 0.45, 0.5, 0.55, 0.6, 0.65, 0.7, or 0.75.

If the ratio of L₁ to L₂ is too large, then L₁ is too large, so that the protruding portion 220 occupies too much of the accommodation space 140, which may cause insufficient space configured to dispose the insulating sealing structure 700 in the accommodation space 140, and further cause insufficient structural strength of the insulating sealing structure 700. If the ratio of L₁ to L₂ is too small, then L₁ is too small, so that the effective acting area between the protruding portion 220 and the second fixed portion 122 is too small, the second fixed portion 122 may hardly support the protruding portion 220 stably and reliably, the pole 200 and the cover plate 100 may hardly achieve stable and reliable connection, and the insulating sealing structure 700 between the second fixed portion 122 and the protruding portion 220 may also hardly achieve good sealing effect.

To avoid the aforementioned problems, in this embodiment, the ratio of L₁ to L₂ is designed to be greater than 0.4 and less than 0.8, which may ensure that the space configured to dispose the insulating sealing structure 700 in the accommodation space 140 is relatively sufficient, and ensure that the insulating sealing structure 700 has strong structural strength. At the same time, a relatively sufficient effective acting area may be formed between the protruding portion 220 and the second fixed portion 122, ensuring that the second fixed portion 122 stably and reliably supports the protruding portion 220, so that the pole 200 and the cover plate 100 achieve stable and reliable connection. Moreover, the insulating sealing structure 700 between the second fixed portion 122 and the protruding portion 220 may also achieve good sealing effect.

As shown in FIG. 4 and FIG. 4A, in some embodiments, the insulating sealing structure 700 includes an upper insulating portion 720. The upper insulating portion 720 extends from between the pole 200 and the first fixed portion 121 to a side of the first fixed portion 121 away from the accommodation space 140, and is connected to the first surface 112. Along the first direction, the upper insulating portion 720 includes a fourth surface 721 away from the second surface 113, the first fixed portion 121 includes a fifth surface 1213a away from the second surface 113, and the fourth surface 721 is located on a side of the fifth surface 1213a away from the second surface 113. Along the first direction, a minimum linear distance between the fifth surface 1213a and the first surface 112 is H₁₁, a minimum linear distance between the fourth surface 721 and the first surface 112 is H₁₂, and a ratio of H₁₁ to H₁₂ is greater than 0.7 and less than 0.9.

Exemplarily, the ratio of H₁₁ to H₁₂ may be 0.75, 0.78, 0.8, 0.82, 0.85, or 0.88.

Taking the structure and direction shown in FIG. 4 and FIG. 4A for illustration, the fourth surface 721 is a top surface of the portion of the upper insulating portion 720 located above the first fixed portion 121, and the fifth surface 1213a is a top surface of the first fixed portion 121.

It should be noted that the insulating sealing structure 700 further includes a sealing portion 710 having elasticity and disposed between the protruding portion 220 and the second fixed portion 122. After the sealing portion 710 is compressed by the protruding portion 220 and the second fixed portion 122, deformation is caused, and good sealing effect is produced. Exemplarily, in the accommodation space 140, the sealing portion 710 is connected to the upper insulating portion 720.

When the upper insulating portion 720 is injection molded, the flowing injection molding material usually flows from a side of the first fixed portion 121 away from the pole body 210 along the second direction toward the accommodation space 140. If the ratio of H₁₁ to H₁₂ is too large, a linear distance between the fourth surface 721 and the fifth surface 1213a along the first direction may be too small, which indicates that a spacing distance between a cavity top surface of a mold and the fifth surface 1213a along the first direction is too small, the injection molding material is not easy to pass through a gap between the cavity top surface and the fifth surface 1213a, and insufficient injection molding material may flow into the accommodation space 140, thereby causing poor molding quality of the formed upper insulating portion 720, so that the pole body 210 and the cover plate 100 may not form reliable connection, and the insulation property and sealing property between the pole 200 and the cover plate 100 may not be ensured. If the ratio of H₁₁ to H₁₂ is too small, a linear distance between the fourth surface 721 and the fifth surface 1213a along the first direction to be too large. When the pole 200 is connected to an external circuit, the upper insulating portion 720 may interfere with the external circuit, which affects the connection reliability between the pole 200 and the external circuit and the electrical performance between the two.

To avoid the aforementioned problems, in this embodiment, the ratio of H₁₁ to H₁₂ is designed to be greater than 0.7 and less than 0.9, to ensure that when forming the upper insulating portion 720 through mold injection molding, there is sufficient gap between the cavity top surface and the fifth surface 1213a, so that the flowing injection molding material may smoothly enter the accommodation space 140, which helps to ensure the molding quality of the upper insulating portion 720. Meanwhile, from interference between the upper insulating portion 720 and the external circuit may be prevented to effectively improve the connection reliability between the pole 200 and the external circuit and the electrical performance between the two.

As shown in FIG. 4 and FIG. 4A, in some embodiments, along the first direction, a projection of the upper insulating portion 720 overlaps with the protruding portion 220, and a minimum dimension of the overlapping portion along the second direction is L₃. For the portion of the first fixed portion 121 extending along the first direction, a minimum linear spacing distance between the first inner wall 1211 thereof and the pole body 210 along the second direction is L₅, and a ratio of L₃ to L₅ is 0.2 to 0.6.

Exemplarily, L₃ may be 0.5 mm, 0.6 mm, 0.7 mm, 0.8 mm, 0.9 mm, 1 mm, 1.1 mm, 1.2 mm, 1.3 mm, 1.4 mm, or 1.5 mm.

Exemplarily, the ratio of L₃ to L₅ may be 0.2, 0.25, 0.3, 0.35, 0.4, 0.45, 0.5, 0.55, or 0.6.

If the ratio of L₃ to L₅ is too large, then L₃ is too large, so that the protruding portion 220 occupies too much of the accommodation space 140, which may cause insufficient space configured to dispose the insulating sealing structure 700 in the accommodation space 140, and further result in insufficient structural strength of the insulating sealing structure 700. If the ratio of L₃ to L₅ is too small, then L₃ is too small, so that the effective acting area between the protruding portion 220 and the insulating sealing structure 700 is too small, making it difficult for the pole 200 and the cover plate 100 to achieve stable and reliable connection through the insulating sealing structure 700.

To avoid the aforementioned problems, in this embodiment, the ratio of L₃ to L₅ is designed to be 0.2 to 0.6, which may ensure that the space configured to dispose the insulating sealing structure 700 in the accommodation space 140 is relatively sufficient, and ensure that the insulating sealing structure 700 has relatively strong structural strength. Meanwhile, a relatively sufficient effective acting area may be formed between the protruding portion 220 and the insulating sealing structure 700, so that the pole 200 and the cover plate 100 may achieve stable and reliable connection through the insulating sealing structure 700.

As shown in FIG. 4 and FIG. 4A, in some embodiments, the insulating sealing structure 700 includes a lower insulating portion 730. Along the first direction, the lower insulating portion 730 is at least configured on a side of the second surface 113 away from the first surface 112. The lower insulating portion 730 includes a first annular plane 731 adjacent to the pole 200 and configured to surround the pole 200. Along the first direction, the pole 200 protrudes from the first annular plane 731 toward a direction away from the first surface 112, and the protruding height is H₁₀, where 0<H₁₀≤1 mm.

Exemplarily, H₁₀ may be 0.1 mm, 0.2 mm, 0.3 mm, 0.4 mm, 0.5 mm, 0.6 mm, 0.7 mm, 0.8 mm, 0.9 mm, or 1 mm.

It may be understood that a bottom terminal of the pole 200 is connected to the electrode assembly 3000 or a transition piece. The bottom terminal of the pole 200 protruding from the first annular plane 731 may prevent the lower insulating portion 730 from interfering with the electrode assembly 3000 or the transition piece, which helps to improve the connection reliability between the pole 200 and the electrode assembly 3000 and the electrical performance between the two.

If H₁₀ is too large, then the protruding height of the pole 200 is too large. When assembling the cover plate assembly 1000 into a battery cell, too much space inside the battery cell may be occupied, which results in relatively low energy density of the battery cell.

To avoid the aforementioned problems, in this embodiment, H₁₀ is designed as 0<H₁₀≤1 mm, which may ensure reliable connection between the pole 200 and the electrode assembly 3000 while reducing the vertical space occupied by the pole 200 inside the battery cell, helping to improve the energy density of the battery cell.

As shown in FIG. 4A, in some embodiments, the first fixed portion 121 includes a first terminal 1212 away from the cover plate body 110. A portion of the first fixed portion 121 close to the first terminal 1212 extends along the second direction toward a center line of the accommodation space 140, a maximum dimension of the portion of the first fixed portion 121 close to the first terminal 1212 along the first direction is H₁₃, and a ratio of H₁₃ to H is 0.35 to 0.45.

Exemplarily, H₁₃ may be 0.7 mm, 0.75 mm, 0.8 mm, 0.85 mm, or 0.9 mm.

Exemplarily, the ratio of H₁₃ to H may be 0.35, 0.36, 0.37, 0.38, 0.39, 0.4, 0.41, 0.42, 0.43, 0.44, or 0.45.

If the ratio of H₁₃ to H is too small, a thickness of the first fixed portion 121 is too small, and the own structural strength is relatively low, so that the risk of cracks occuring at the bending portion of the first fixed portion 121 is relatively large, and the first fixed portion 121 may hardly provide good positioning for the pole 200, which results in poor connection reliability between the pole 200 and the cover plate 100. If the ratio of H₁₃ to H is too large, the thickness of the first fixed portion 121 is too large, then the thickness of the second fixed portion 122 may be too small, and the own structural strength is relatively low, so that the risk of cracks occuring at the second connection portion is relatively large, which may hardly provide stable and reliable supporting and positioning for the pole 200.

To avoid the aforementioned problems, in this embodiment, the ratio of H₁₃ to H is designed as 0.35 to 0.45, which may ensure that the first fixed portion 121 and the second fixed portion 122 have relatively large structural strength, providing good positioning and fixing for the pole 200.

As shown in FIG. 4A, in some embodiments, the second fixed portion 122 includes a second terminal 1222 away from the cover plate body 110. A portion of the second fixed portion 122 close to the second terminal 1222 extends along the second direction toward a center line of the accommodation space 140, a maximum dimension of the portion of the second fixed portion 122 close to the second terminal 1222 along the first direction is H₁₄, and a ratio of H₁₄ to H is 0.4 to 0.5.

Exemplarily, H₁₄ may be 0.8 mm, 0.85 mm, 0.9 mm, 0.95 mm, or 1 mm.

Exemplarily, the ratio of H₁₄ to H may be 0.4, 0.41, 0.42, 0.43, 0.44, 0.45, 0.46, 0.47, 0.48, 0.49, or 0.5.

If the ratio of H₁₄ to H is too small, a thickness of the second fixed portion 122 is too small, and the own structural strength is relatively low, so that the risk of cracks occuring at the second connection portion is relatively large. In one aspect, the second fixed portion 122 may hardly provide good positioning for the pole 200. In another aspect, the second fixed portion 122 may undergo bending deformation when subjected to compression, and hardly provide effective compression for the insulating sealing structure 700 located between the protruding portion 220 and the second fixed portion 122, which may result in low sealing performance of the insulating sealing structure 700, and cause adverse effects on the sealing performance of the cover plate assembly 1000. If the ratio of H₁₄ to H is too large, the thickness of the second fixed portion 122 is too large, then the thickness of the first fixed portion 121 may be too small, and the own structural strength is relatively low, so that the risk of cracks occuring at the first connection portion is relatively large, and the first fixed portion 121 may hardly provide good fixing for the pole 200.

To avoid the aforementioned problems, in this embodiment, the ratio of H₁₄ to H is designed as 0.4 to 0.5, which may ensure that the first fixed portion 121 and the second fixed portion 122 have relatively large structural strength, provide good positioning and fixing for the pole 200, and provide effective compression for the insulating sealing structure 700, and may also ensure that the sealing effect of the insulating sealing structure 700 is stable and reliable, helping to improve the sealing performance of the cover plate assembly 1000.

As shown in FIG. 4 and FIG. 4A, in some embodiments, along the first direction, a maximum linear spacing distance of facing portions of the first inner wall 1211 and the second inner wall 1221 is H₄, and the pole 200 satisfies at least one of the conditions as follows. First, a dimension of the pole 200 along the first direction is H₉, and a ratio of H₄ to H₉ is 0.3 to 0.5.

Exemplarily, the ratio of H₄ to H₉ may be 0.3, 0.33, 0.35, 0.38, 0.4, 0.43, 0.45, 0.48, or 0.5.

If the ratio of H₄ to H₉ is too large, the portion of the first fixed portion 121 close to the first terminal 1212 and the portion of the second fixed portion 122 close to the second terminal 1222 may be spaced too far apart along the first direction, and during the process of stamping to form the first fixed portion 121 and the second fixed portion 122, cracks may occur at the first connection portion and the second connection portion. If the ratio of H₄ to H₉ is too small, then the accommodation space 140 may hardly have sufficient space to accommodate the protruding portion 220 and the insulating sealing structure 700, which may result in both the thickness of the protruding portion 220 disposed in the accommodation space 140 and the thickness of the insulating sealing structure 700 being too small. With structural strength being too low, and cracks may easily occur, which may cause adverse effects on the connection reliability between the pole 200 and the cover plate 100, as well as the sealing and insulating performance of the cover plate assembly 1000.

To avoid the aforementioned problems, in this embodiment, the ratio of H₄ to H₉ is designed as 0.3 to 0.5, which may reduce the risk of cracks occuring at the first connection portion and the second connection portion, and helps to improve the connection reliability among the first fixed portion 121, the second fixed portion 122, and the cover plate body 110. Meanwhile, the accommodation space 140 has relatively sufficient space to accommodate the protruding portion 220 and the insulating sealing structure 700, so that the protruding portion 220 and the insulating sealing structure 700 in the accommodation space 140 have thickness that meets process requirements, with relatively high structural strength, which may enable reliable connection between the pole 200 and the cover plate 100, and ensure that the cover plate assembly 1000 has good sealing and insulating performance.

Second, along the first direction, a ratio of H₆ to H₄ is greater than 0.2 and less than 0.4.

Exemplarily, the ratio of H₆ to H₄ may be 0.22, 0.25, 0.27, 0.3, 0.32, 0.35, or 0.37.

The problems caused by the ratio of H₆ to H₄ being too large are similar to the problems caused by L₃ being too large and the problems caused by the ratio of H₄ to H₉ being too small, and the problems caused by the ratio of H₆ to H₄ being too small are similar to the problems caused by L₃ being too small and the problems caused by the ratio of H₄ to H₉ being too large, which is not repeated here.

The beneficial effects achieved by designing the ratio of H₆ to H₄ to be greater than 0.2 and less than 0.4 in this embodiment are similar to the beneficial effects achieved by designing the ratio of L₃ to L₅ to be 0.2 to 0.6, and designing the ratio of H₄ to H₉ to be 0.3 to 0.5, which is not repeated here.

Based on the same inventive concept, in combination of the description of the cover plate assembly 1000 of the aforementioned embodiments, a battery cell provide in this embodiment, which has the corresponding technical effects of the cover plate assembly 1000 of the aforementioned embodiments, which is not repeated here.

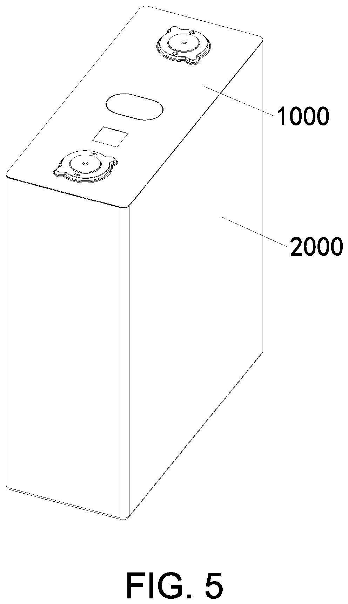

FIG. 5 is a schematic view of a battery cell according to an embodiment of the disclosure.

As shown in FIG. 4 and FIG. 5, the battery cell includes a housing 2000, an electrode assembly 3000, and the cover plate assembly 1000 in the aforementioned embodiments. The cover plate assembly 1000 is connected to the housing 2000. The electrode assembly 3000 is disposed in a space formed by the cover plate assembly 1000 and the housing 2000 enclosing together.

It should be noted that a terminal of the pole 200 of the cover plate assembly 1000 close to the electrode assembly 3000 may extend out of the insulating sealing structure 700 (that is, extending out of the lower insulating portion 730), and be exposed in the space where the electrode assembly 3000 is located, so as to facilitate electrical connection between the pole 200 and the electrode tabs of the electrode assembly 3000.

## Claims

1. A battery cell, **characterized in that** comprising:
a housing (2000);
an electrode assembly (3000);
a cover plate assembly (1000), connected to the housing (2000), the electrode assembly (3000) being disposed in a space formed by the cover plate assembly (1000) and the housing (2000) enclosing together, the cover plate assembly (1000) comprising:
a cover plate (100) and a pole (200) insulated and connected to each other;
the cover plate (100) comprises a cover plate body (110) and a fixed portion (120), the cover plate body (110) comprises a first surface (112) and a second surface (113) disposed opposite to each other along a first direction (Z), the fixed portion (120) is arranged around the pole (200) and extends at least from the second surface (113) along a second direction (X) toward a center line of the pole (200) to position the pole (200) along the first direction (Z), and the second direction (X) is perpendicular to the first direction (Z);
the fixed portion (120) protrudes from the second surface (113) along the first direction (Z) toward a direction away from the cover plate body (110), a maximum linear distance between a protruding section of the fixed portion (120) and the second surface (113) along the first direction (Z) is H₁, a thickness of the cover plate body (110) is H, and a ratio of H₁ to H is greater than 0 and less than or equal to 0.2.

2. The battery cell according to claim 1, wherein 1 mm≤H≤3 mm, and a ratio of H₁ to H is greater than 0 and less than or equal to 0.15.

3. The battery cell according to claim 1, wherein the fixed portion (120) comprises a first fixed portion (121) and a second fixed portion (122), the first fixed portion (121) extends from the first surface (112) at least along the first direction (Z) toward a direction away from the cover plate body (110), the second fixed portion (122) extends from the second surface (113) at least along the second direction (X) toward the center line of the pole (200);
the first fixed portion (121) comprises a first inner wall (1211), the second fixed portion (122) comprises a second inner wall (1221) and a sixth surface (1223) disposed opposite to the second inner wall (1221), the first inner wall (1211), the second inner wall (1221) and a step portion (130) connected to the first inner wall (1211) and the second inner wall (1221) form an accommodation space (140), the step portion (130) protrudes from the second inner wall (1221) toward a direction of the first surface (112), and the pole (200) is at least partially disposed in the accommodation space (140);
along the first direction (Z), a maximum linear distance between the step portion (130) and the second inner wall (1221) is H₂, a maximum linear distance between the sixth surface (1223) and the first surface (112) is H₃, and a ratio of H₂ to H₃ is 0.02 to 0.5.

4. The battery cell according to claim 3, wherein the second surface (113) is provided with a groove (111) surrounding the second fixed portion (122), and the groove (111) satisfies at least one of following conditions:
along the second direction (X), the first fixed portion (121) comprises a first outer wall (1213) away from the accommodation space (140), the first outer wall (1213) is connected to the first surface (112) and forms a first connection portion (a); along the first direction (Z), a projection of the first connection portion (a) is in the groove (111);
a minimum linear spacing distance between adjacent edges of the groove (111) and an inner wall of the accommodation space (140) is L₄, where L₄>0.8 mm;
an intersection point of straight lines where the first inner wall (1211) and the second inner wall (1221) are located is x, and a minimum linear distance between the groove (111) and x is L₄', where L₄ is greater than L₄'; or
a minimum linear distance from a connection line between the step portion (130) and an intersection point of the first inner wall (1211) and the second inner wall (1221) to the groove (111) is L₄", where L₄ is equal to or greater than L₄".

5. The battery cell according to claim 3, wherein the pole (200) comprises a columnar pole body (210) and a protruding portion (220) protruding from the pole body (210) along the second direction (X), the protruding portion (220), the first fixed portion (121), and the second fixed portion (122) are all ring structures, a minimum diameter of an inner hole enclosed by the first fixed portion (121) is D₁, a minimum diameter of an inner hole enclosed by the second fixed portion (122) is D₂, and a maximum outer diameter of the protruding portion (220) is D₃, where D₂<D₃<D₁.

6. The battery cell according to claim 3, wherein the first fixed portion (121) comprises a first terminal (1212) away from the cover plate body (110), a portion of the first fixed portion (121) close to the first terminal (1212) extends toward the center line of the pole (200), the pole (200) comprises a columnar pole body (210) and a protruding portion (220) protruding from the pole body (210) along the second direction (X), the cover plate assembly (1000) further comprises an insulating sealing structure (700), and the pole (200) is insulated and connected to the cover plate (100) by the insulating sealing structure (700);
along the first direction (Z), a minimum linear spacing distance between the first terminal (1212) and the protruding portion (220) is H₅, a maximum linear spacing distance between facing portions of the first inner wall (1211) and the second inner wall (1221) is H₄, and a ratio of H₅ to H₄ is 0.3 to 0.47.

7. The battery cell according to claim 6, wherein the pole body (210) comprises a third surface away from the second surface (113) along the first direction (Z);
along the first direction (Z), a maximum dimension of the protruding portion (220) is H₆, a minimum linear spacing distance between the third surface and the protruding portion (220) is H₇, and a ratio of H₆ to H₇ is 0.2 to 0.3.

8. The battery cell according to claim 6, wherein the pole body (210) comprises a third surface (211) away from the second surface (113) along the first direction (Z);
along the first direction (Z), a maximum linear spacing distance between the third surface (211) and the first surface (112) is H₈, a maximum dimension of the pole (200) is H₉, and a ratio of H₈ to H₉ is 0.3 to 0.6.

9. The battery cell according to claim 6, wherein along the first direction (Z), a projection of the second fixed portion (122) and a projection of the protruding portion (220) overlap, and a minimum dimension of an overlapping portion along the second direction (X) is L₁, on a side of the protruding portion (220) close to the second fixed portion (122), along the second direction (X), a linear spacing distance between an terminal portion of the protruding portion (220) away from the pole body (210) and the pole body (210) close to the second fixed portion (122) is L₂, and a ratio of L₁ to L₂ is greater than 0.4 and less than 0.8.

10. The battery cell according to claim 6, wherein the insulating sealing structure (700) comprises an upper insulating portion (720), and the upper insulating portion (720) extends from between the pole (200) and the first fixed portion (121) to a side of the first fixed portion (121) away from the accommodation space (140) and is connected to the first surface (112); along the first direction (Z), the upper insulating portion (720) comprises a fourth surface (721) away from the second surface (113), the first fixed portion (121) comprises a fifth surface (1213a) away from the second surface (113), and the fourth surface (721) is located on a side of the fifth surface (1213a) away from the second surface (113);
along the first direction (Z), a minimum linear distance between the fifth surface (1213a) and the first surface (112) is H₁₁, a minimum linear distance between the fourth surface (721) and the first surface (112) is H₁₂, and a ratio of H₁₁ to H₁₂ is greater than 0.7 and less than 0.9.

11. The battery cell according to claim 10, wherein along the first direction (Z), a projection of the upper insulating portion (720) overlaps a projection of the protruding portion (220), and a minimum dimension of an overlapping portion along the second direction (X) is L₃; for a portion of the first fixed portion (121) extending along the first direction (Z), a minimum linear spacing distance between the first inner wall (1211) thereof and the pole body (210) along the second direction (X) is L₅, and a ratio of L₃ to L₅ is 0.2 to 0.6.

12. The battery cell according to claim 10, wherein the insulating sealing structure (700) comprises a lower insulating portion (730); along the first direction (Z), the lower insulating portion (730) is at least disposed on a side of the second surface (113) away from the first surface (112);
the lower insulating portion (730) comprises a first annular plane (731) adjacent to the pole (200) and configured to surround the pole (200); along the first direction (Z), the pole (200) protrudes from the first annular plane (731) in a direction away from the first surface (112), and a protruding height is H₁₀, where 0<H₁₀≤1 mm.

13. The battery cell according to claim 3, wherein the first fixed portion (121) comprises a first terminal (1212) away from the cover plate body (110), a portion of the first fixed portion (121) close to the first terminal (1212) extends toward a center line of the accommodation space (140) along the second direction (X), a maximum dimension of a portion of the first fixed portion (121) close to the first terminal (1212) along the first direction (Z) is H₁₃, and a ratio of H₁₃ to H is 0.35 to 0.45.

14. The battery cell according to claim 3, wherein the second fixed portion (122) comprises a second terminal (1222) away from the cover plate body (110), a portion of the second fixed portion (122) close to the second terminal (1222) extends toward a center line of the accommodation space (140) along the second direction (X), a maximum dimension of a portion of the second fixed portion (122) close to the second terminal (1222) along the first direction (Z) is H₁₄, and a ratio of H₁₄ to H is 0.4 to 0.5.

15. The battery cell according to claim 3, wherein along the first direction (Z), a maximum linear spacing distance between facing portions of the first inner wall (1211) and the second inner wall (1221) is H₄; the pole (200) satisfies at least one of following conditions:
a dimension of the pole (200) along the first direction (Z) is H₉, and a ratio of H₄ to H₉ is 0.3 to 0.5; or
the pole (200) comprises a columnar pole body (210), and a protruding portion (220) protruding from the pole body (210) along the second direction (X); along the first direction (Z), a maximum dimension of the protruding.
